**Europäisches Patentamt**

**European Patent Office**

**Office européen des brevets**

(11) Veröffentlichungsnummer: **0 126 888**
**B1**

(12) **EUROPÄISCHE PATENTSCHRIFT**

(45) Veröffentlichungstag der Patentschrift:
**29.10.86**

(21) Anmeldenummer: **84103334.3**

(22) Anmeldetag: **27.03.84**

(51) Int. Cl.⁴: **G 01 B 21/02**

(54) **Messeinrichtung.**

(30) Priorität: **03.05.83 DE 3316081**

(43) Veröffentlichungstag der Anmeldung:
**05.12.84 Patentblatt 84/49**

(45) Bekanntmachung des Hinweises auf die Patenterteilung:
**29.10.86 Patentblatt 86/44**

(84) Benannte Vertragsstaaten:
**AT CH DE FR GB IT LI NL SE**

(56) Entgegenhaltungen:
**DE - A - 3 106 701**
**DE - A - 3 116 827**

(73) Patentinhaber: **Dr. Johannes Heidenhain GmbH,
Nansenstrasse 17, D-8225 Traunreut (DE)**

(72) Erfinder: **Affa, Alfred, Ing. grad., Hochfellnstrasse 6,
D-8221 Stein (DE)**
Erfinder: **Ernst, Alfons, Dipl.-Ing., Traunring 62,
D-8225 Traunreut (DE)**

## Beschreibung

Die Erfindung betrifft eine Messeinrichtung gemäss dem Oberbegriff des Anspruchs 1.

Einrichtungen bei Messsystemen für Werkzeugmaschinen zur Kompensation thermischer Längenänderungen von Maschinenteilen sind bereits aus der DE-PS 3 106 701 bekannt, bei der ein Dehnstab aus einem Material mit hohem thermischem Ausdehnungskoeffizienten mit einem Ende an einem Maschinenteil und mit dem anderen Ende an einem Massstab befestigt ist, wobei die Wärmedehnung des Dehnstabes gleich derjenigen des Maschinenteils ist, so dass die Wärmedehnung des Maschinenteils vom Messsystem erfasst wird.

Bei dieser Einrichtung bestimmt die wirksame Länge des Dehnstabes zwischen den Befestigungspunkten am Maschinenteil und am Massstab die Kompensation der thermischen Längenänderungen des Maschinenteils; diese vorgegebene wirksame Länge des Dehnstabes ist spezifisch für dieses Maschinenteil, so dass das Messsystem bei Maschinenteilen mit anderem Temperaturgang nicht ohne Änderungen eingesetzt werden kann.

Der Erfindung liegt die Aufgabe zugrunde, eine Messeinrichtung der oben genannten Gattung mit einer Einrichtung zur Kompensation von thermischen Längenänderungen bei Maschinenteilen mit unterschiedlichen thermischen Ausdehnungskoeffizienten anzugeben.

Diese Aufgabe wird erfindungsgemäss durch die kennzeichnenden Merkmale des Anspruchs 1 gelöst.

Die mit der Erfindung erzielten Vorteile bestehen insbesondere darin, dass bei der vorgeschlagenen Messeinrichtung mit einfachen Mitteln eine leichte Anpassung an Maschinenteile mit unterschiedlichem Temperaturgang zur Längenkompensation ermöglicht wird, so dass das Messsystem universell einsetzbar ist.

Vorteilhafte Ausbildungen der Erfindung entnimmt man den abhängigen Ansprüchen.

Ausführungsbeispiele der Erfindung werden anhand der Zeichnung näher erläutert.

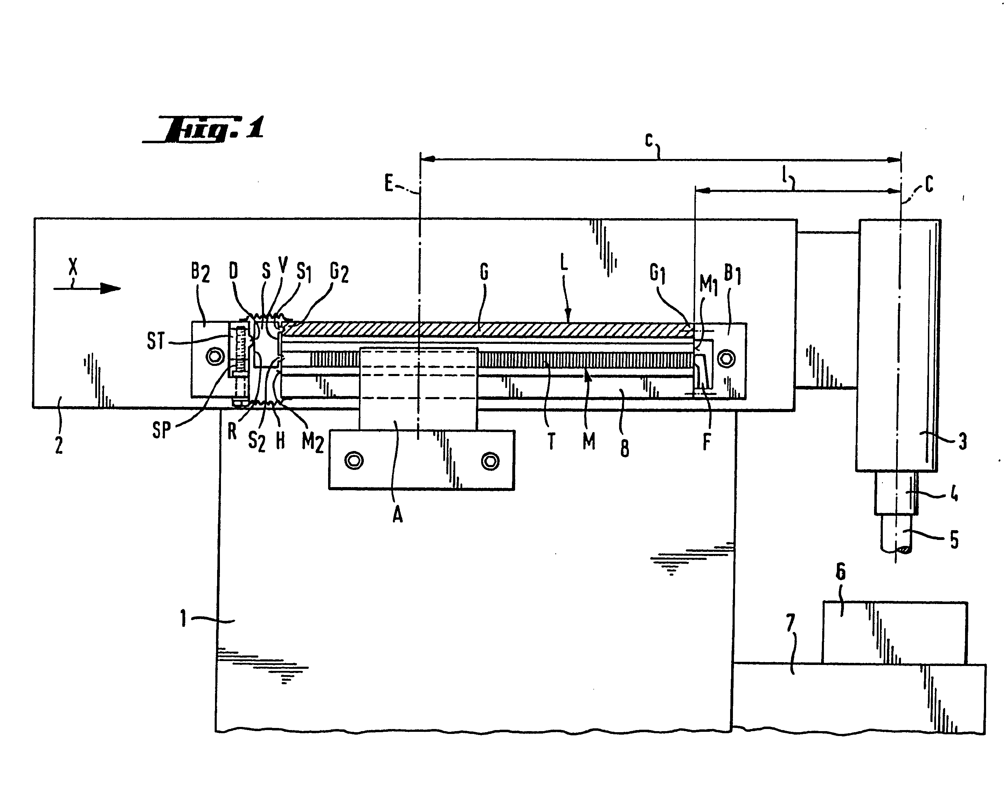

In Fig. 1 ist eine Fräsmaschine mit einem Maschinenbett 1 dargestellt, auf dem ein Spindelstock 2 in X-Richtung horizontal verschiebbar geführt ist. Der Spindelstock 2 weist an einem Ende einen Fräskopf 3 mit einer senkrechten Befestigungsspindel 4 mit einem Werkzeug 5 zur Bearbeitung eines Werkstücks 6 auf einem Maschinentisch 7 auf. Zur Messung der Relativlage zwischen dem Werkzeug 5 und dem Werkstück 6 in X-Richtung ist am Spindelstock 2 eine Längenmesseinrichtung L angeordnet.

Bei einer derartigen Werkzeugmaschine treten aber insbesondere am Spindelstock 2 häufig höhere Temperaturen als die Umgebungstemperatur auf, die durch den Antrieb, das Getriebe und die Lagerungen des Spindelstocks 2 hervorgerufen werden. Dadurch kann, da die Längenmesseinrichtung L nicht in unmittelbarer Nähe des Werkzeugs 5 angebracht werden kann, das Werkzeug 5 eine geringfügig andere Relativbewegung in X-Richtung ausführen als es die Längenmesseinrichtung L anzeigt.

Die Längenmesseinrichtung L besteht aus einem Massstabträger in Form eines Gehäuses G, in dessen Innerem ein Massstab M mit einer Teilung T mittels einer nicht gezeigten elastischen Klebeschicht befestigt ist, die eine gewisse Verschiebung des Massstabs M in X-Richtung (Messrichtung) relativ zum Gehäuse G zulässt. Das Gehäuse G ist über zwei Befestigungselemente $B_1$, $B_2$ am Spindelstock 2 befestigt und weist einen von nicht gezeigten Dichtelementen verschlossenen Längsschlitz 8 auf, durch den eine am Maschinenbett 1 befestigte Abtasteinheit A zur Abtastung der Teilung T des Massstabs M mit bekannten Mitteln hindurchgreift.

Zur Kompensation von thermischen Längenänderungen des Spindelstocks 2 und damit von thermisch bedingten Verschiebungen des Werkzeugs 5 relativ zum Werkstück 6 ist das Gehäuse G mit dem einen Ende $G_1$ direkt mit dem ersten Befestigungselement $B_1$ und mit dem anderen Ende $G_2$ über ein im zweiten Befestigungselement $B_2$ gelagertes Schwenkelement S mit dem benachbarten Ende $M_2$ des Massstabs M verbunden. Dieses Schwenkelement S weist an einer Vorderseite V zwei Vorsprünge $S_1$, $S_2$ auf, die in entsprechende Ausnehmungen in den Enden $G_2$, $M_2$ des Gehäuses G und des Massstabs M eingreifen, und steht mit einer ebenen Rückseite R mit einem Vorsprung D eines Einstellelements ST in Kontakt, das im Befestigungselement $B_2$ quer zur Messrichtung X in einer Führung mittels einer Spindel SP verschiebbar ist. Dieser Vorsprung D dient als Drehpunkt für das Schwenkelement S und erlaubt bei einer Verschiebung des Einstellelements ST mittels der Spindel SP ein Einstellen des Hebelverhältnisses des Schwenkelements S gemäss der erforderlichen Kompensation der thermischen Längenänderung des Spindelstocks 2 und damit der thermisch bedingten Verschiebung des Werkzeugs relativ zum Werkstück 6. Das Befestigungselement $B_2$ wird so am Spindelstock 2 angebracht, das es spielfrei über das Schwenkelement S mit dem Gehäuse G und dem Massstab M verbunden ist. Zur Kapselung gegen Verunreinigungen ist zwischen dem Befestigungselement $B_2$ und dem Ende $G_2$ des Gehäuses G ein Balg H angeordnet.

Bei einer Temperaturerhöhung $\triangle T$ des Spindelstocks 2 gegenüber dem Maschinenbett 1 und dem Werkstück 6 beim Betrieb der Fräsmaschine vergrössert sich der Abstand c zwischen der Werkzeugebene C (Bearbeitungsstelle) des Werkzeugs 5 und der Abtastebene E (Abtaststelle) der Abtasteinheit A um den Betrag $\triangle c$ in positiver X-Richtung, während sich das am Befestigungselement $B_1$ befindliche andere Ende $M_1$ des Massstabs M gleichfalls in positiver X-Richtung nur um den Betrag $\triangle c - \triangle l$ verschiebt, wobei der Betrag $\triangle l$ die thermisch bedingte Vergrösserung der Strecke l zwischen dem Ende $M_1$ des Massstabs M und der Werkzeugebene C des Werkzeugs 5 darstellt.

Da auch das Gehäuse G als Dehnelement, beispielsweise aus Aluminium, gleichfalls die Temperaturänderung $\triangle T$ erfährt, aber einen wesentlich grösseren thermischen Ausdehnungskoeffizienten gegenüber demjenigen des Spindelstocks 2, beispielsweise aus Grauguss, besitzt, verschiebt sich das Ende $G_2$ des Gehäuses G in negativer X-Richtung relativ zum Drehpunkt D des Schwenkelements S, so dass durch ein entsprechend eingestelltes Hebelverhältnis durch Verschieben des Drehpunkts D quer zur X-Achse der Massstab M um den Betrag $\triangle l$ in positiver X-Richtung verschoben wird. Bei einer Verschiebung des Werkzeugs 5 um den Betrag $\triangle c$ gegenüber der Abtastebene E der Abtasteinheit A verschiebt sich damit auch der Massstab M um den Betrag $\triangle c$ - $\triangle l$ + $\triangle l$ = $\triangle c$ gegenüber der Abtastebene E. Die Steuerung der Fräsmaschine veranlasst aufgrund der Verschiebung des Massstabs M um den Betrag $\triangle c$ in positiver X-Richtung eine Rückverschiebung der Werkzeugebene C des Werkzeugs 5 um den Betrag $\triangle c$ in negativer X-Richtung, so dass die thermische Längenänderung des Spindelstocks 2 keinen nachteiligen Einfluss auf die Bearbeitungsgenauigkeit ausübt. Die Rückstellkraft für den Massstab M wird durch die elastische Klebeschicht bewirkt.

Die obigen Ausführungen gelten strenggenommen nur bei einem Massstab M aus einem Material mit vernachlässigbar kleinem thermischem Ausdehnungskoeffizienten, z.B. Quarzglas oder Invar. Bei einem Massstab M aus einem Material mit endlichem thermischem Ausdehnungskoeffizienten muss die entsprechende thermische Längenänderung durch eine Korrektur des Hebelverhältnisses des Schwenkelements S berücksichtigt werden. Man kann aber bei einem solchen Massstab M mit einem endlichen thermischen Ausdehnungskoeffizienten auch das Ende $M_1$ mit einer in negativer X-Richtung wirkenden, entsprechend dimensionierten Feder F beaufschlagen, so dass der Massstab M nicht nur um den Betrag $\triangle l$ in positiver X-Richtung verschoben, sondern zusätzlich gestaucht wird, um die Längenänderung durch die Erwärmung um den Temperaturbetrag $\triangle T$ zu kompensieren; die Federkonstante dieser Feder F muss ebenfalls in nicht gezeigter Weise maschinenspezifisch einstellbar sein.

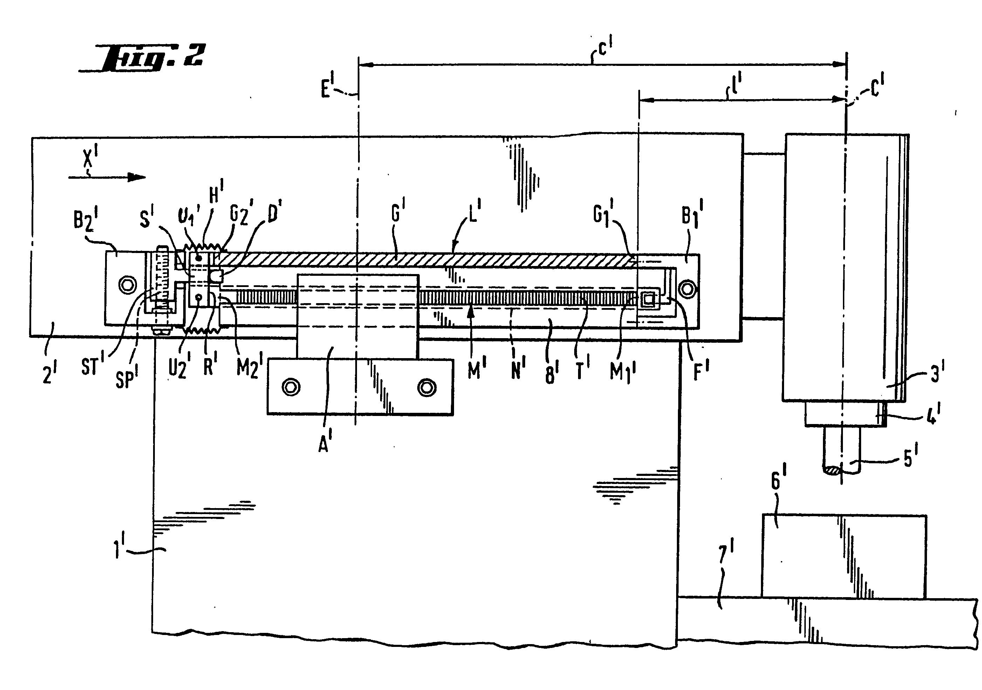

In Fig. 2 ist eine Fräsmaschine mit einer Längenmesseinrichtung L' dargestellt, deren gleichartige Elemente die gleichen, aber oben gestrichenen Bezugszeichen aufweisen.

Die Längenmesseinrichtung L' besteht aus einem Massstabträger in Form eines Gehäuses G', in dessen Innerem ein Massband M' mit einer Teilung T' in einer Nut N' in X'-Richtung (Messrichtung) relativ zum Gehäuse G' verschiebbar ist. Das Gehäuse G' ist über zwei Befestigungselemente $B_1'$, $B_2'$ am Spindelstock 2' befestigt und weist einen von nicht gezeigten Dichtelementen verschlossenen Längsschlitz 8' auf, durch den eine am Maschinenbett 1' befestigte Abtasteinheit A' zur Abtastung der Teilung T' des Massbands M' mit bekannten Mitteln hindurchgreift.

Zur Kompensation von thermischen Längenänderungen des Spindelstocks 2' und damit von thermisch bedingten Verschiebungen des Werkzeugs 5' relativ zum Werkstück 6' ist das Gehäuse G' mit dem einen Ende $G_1'$ direkt mit dem ersten Befestigungselement $B_1'$ und mit dem anderen Ende $G_2'$ über ein im zweiten Befestigungselement $B_2'$ gelagertes Schwenkelement S' mit dem benachbarten Ende $M_2'$ des Massbands M' über jeweils ein Gelenk $U_1'$, $U_2'$ verbunden. Dieses Schwenkelement S' steht mit einer dem Massband M' zugewandten ebenen Rückseite R' mit einem Vorsprung D' eines im Befestigungselement $B_2'$ quer zur Messrichtung X' in einer Führung mittels einer Spindel SP' verschiebbaren Einstellelements ST' in Kontakt. Dieser Vorsprung D' dient als Drehpunkt für das Schwenkelement S' und erlaubt bei einer Verschiebung des Einstellelements ST' mittels der Spindel SP' ein Einstellen des Hebelverhältnisses des Schwenkelements S' gemäss der erforderlichen Kompensation der thermischen Längenänderung des Spindelstocks 2' und damit der thermisch bedingten Verschiebung des Werkzeugs 5' relativ zum Werkstück 6'. Das andere Ende $M_1'$ des Massstabs M' wird mittels einer Zugfeder F' im Befestigungselement $B_1'$ gelagert, während das Befestigungselement $B_2'$ so am Spindelstock 2' angebracht ist, dass es spielfrei über das Schwenkelement S' mit dem Gehäuse G' und dem Massband M' verbunden ist. Zur Kapselung gegen Verunreinigungen ist zwischen dem Befestigungselement $B_2$ und dem Ende $G_2'$ des Gehäuses G' ein Balg H' angeordnet.

Bei einer Temperaturerhöhung $\triangle T$ des Spindelstocks 2' gegenüber dem Maschinenbett 1' und dem Werkstück 6' vergrössert sich der Abstand c' zwischen der Werkzeugebene C' des Werkzeugs 5' und der Abtastebene E' der Abtasteinheit A' um den Betrag $\triangle c'$ in positiver X'-Richtung, während sich das am Befestigungselement $B_1'$ befindliche andere Ende $M_1'$ des Massbands M' ebenfalls in positiver X'-Richtung nur um den Betrag $\triangle c'$ - $\triangle l'$ verschiebt, wobei der Betrag $\triangle l'$ die thermisch bedingte Vergrösserung der Strecke l' zwischen dem Ende $M_1'$ des Massbands M' und der Werkzeugebene C' des Werkzeugs 5' darstellt.

Da auch das Gehäuse G' als Dehnelement mit einem wesentlich grösseren thermischen Ausdehnungskoeffizienten gegenüber demjenigen des Spindelstocks 2' gleichfalls die Temperaturerhöhung $\triangle T$ erfährt, verschiebt sich das Ende $G_2'$ des Gehäuses G' in negativier X'-Richtung relativ zum Drehpunkt D' des Schwenkelements S', so dass durch ein entsprechend eingestelltes Hebelverhältnis durch Verschieben des Drehpunkts D' quer zur X'-Richtung des Massbands M' um den Betrag $\triangle l'$ in positiver X'-Richtung unter Mitwirkung der Zugfeder F' verschoben wird, deren Federkonstante so dimensioniert ist, dass die ursprüngliche Länge des Massbands M' auch bei einer Verschiebung erhalten bleibt. Bei einer Verschiebung des Werkzeugs 5' um den Betrag $\triangle c'$ gegenüber der Abtastebene E' der Abtasteinheit A' verschiebt sich somit auch das Massband M' um den Betrag $\triangle c'$ - $\triangle l'$ + $\triangle l'$ = $\triangle c'$ gegenüber der Abtastebene E'.

Bei dieser Einrichtung ist ein Massband M' aus einem Material mit vernachlässigbar kleinem thermischen Ausdehnungskoeffizienten, z.B. Invar, erforderlich. Bei einem Massband M' aus einem Material mit endlichem thermischem Ausdehnungskoeffizienten muss die entsprechende thermische Längendehnung durch eine Korrektur des Hebelverhältnisses des Schwenkelements S' berücksichtigt werden.

Zur Verwendung eines solchen Massbands M' aus einem Material mit endlichem thermischem Ausdehnungskoeffizienten wird ferner vorgeschlagen, dass das Massband M' bei der Fertigung kürzer hergestellt wird als es der wahren Messlänge entspricht; d.h. die Gitterkonstante der Teilung T' ist gegenüber der erforderlichen Gitterkonstanten verkleinert. Dieses verkürzte Massband M' wird nun in der Längenmesseinrichtung L' mittels der Zugfeder F' auf die richtige Messlänge bei der Bezugstemperatur, z.B. der Umgebungstemperatur oder der Temperatur des Werkstücks 6', gedehnt. Bei der Erwärmung des Spindelstocks 2' und damit des Gehäuses G' um den Temperaturbetrag $\triangle T$ wird das Massband M' nicht nur um den Betrag $\triangle l'$ in positiver X'-Richtung verschoben, sondern erfährt durch die entsprechend dimensionierte Zugfeder F' eine «Stauchung», um die Längenzunahme durch die Erwärmung um den Temperaturbetrag $\triangle T$ zu kompensieren; die Zugfeder F' weist dazu eine Federkennlinie auf, die die zur Dehnung erforderliche Zugspannung im Massband M' in der Masse reduziert, dass die durch die Temperaturerhöhung $\triangle T$ hervorgerufene Längenänderung wieder rückgängig gemacht wird, so dass beim Massband M' stets die ursprüngliche Messlänge erhalten bleibt. Die Federkonstante dieser Zugfeder F' muss ebenfalls in nicht gezeigter Weise maschinenspezifisch einstellbar sein.

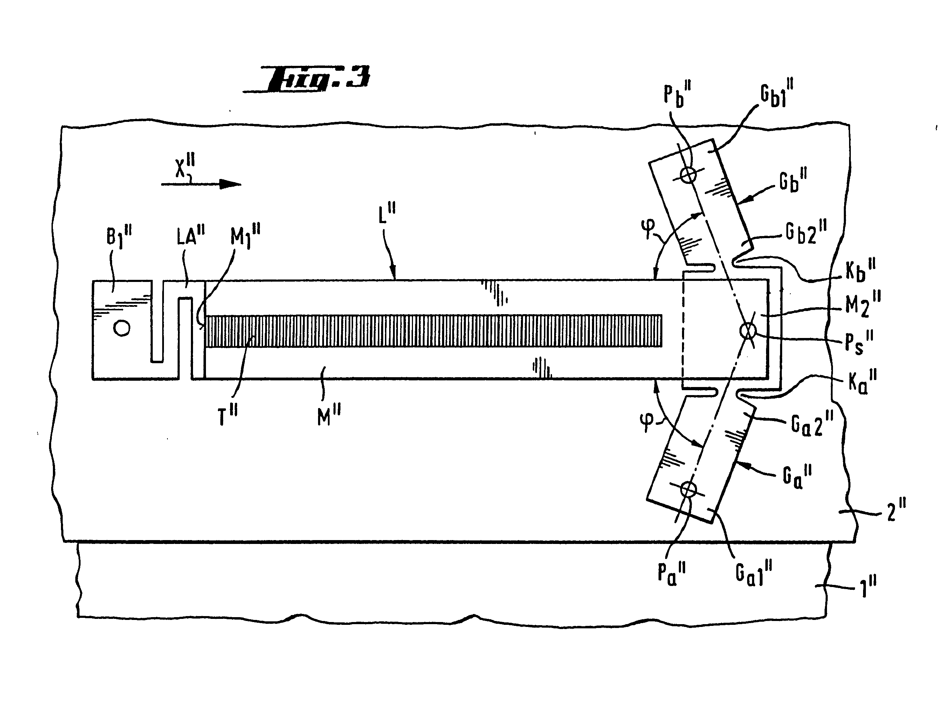

In Fig. 3 ist in einem Ausschnitt eine Fräsmaschine mit einer Längenmesseinrichtung L' dargestellt, deren gleichartige Elemente die gleichen, aber oben zweifach gestrichenen Bezugszeichen aufweisen.

Das Längenmessgerät L'' besteht aus einem Massstab M'' mit einer Teilung T'', das mit einem Ende $M_1$'' über ein Befestigungselement $B_1$'' am Spindelstock 2'' befestigt ist. Das Befestigungselement $B_1$'' weist ein mäanderförmiges Längenausgleichselement LA'' auf, das direkt mit dem Massstab M'' verbunden ist und eine Verschiebung des Massstabs M'' in der X''-Richtung relativ zum Spindelstock 2'' erlaubt. Zur Abtastung der Teilung T'' des Massstabs M'' ist eine nicht dargestellte Abtasteinheit am Maschinenbett 1'' befestigt.

Zur Kompensation von thermischen Längenänderungen des Spindelstocks 2'' und damit von thermisch bedingten Verschiebungen eines Werkzeugs relatv zu einem Werkstück sind zwei Dehnelemente $G_a$'', $G_b$'' mit den einen Enden $G_{a1}$'', $G_{b1}$'' mittels jeweils eines Befestigungspunkts $P_a$'', $P_b$'' am Spindelstock 2'' befestigt. Die anderen Enden $G_{a2}$'', $G_{b2}$'' der Dehnelemente $G_a$'', $G_b$'' sind mit dem anderen Ende $M_2$'' des Massstabs M'' über Gelenke $K_a$'', $K_b$'' mittels eines Befestigungspunkts $P_S$'' verbunden, die durch Querschnittsverengungen gebildet sind. Bevorzugt bestehen die Dehnelemente $G_a$'', $G_b$'' aus einer Platte, beispielsweise aus Aluminium, die am Ende $M_2$'' des Massstabs M'' angeordnet ist; die beiden Dehnelemente $G_a$'', $G_b$'' sind unter einem Winkel $\varphi$ zur X''-Richtung geneigt.

Bei einer Temperaturerhöhung $\triangle T$ des Spindelstocks 2'' gegenüber dem Maschinenbett 1'' und dem Werkstück vergrössert sich der Abstand zwischen der Werkzeugebene des Werkzeugs und der Abtastebene der Abtasteinheit um einen bestimmten Betrag $\angle c''$ in positiver X''-Richtung. Da auch die Dehnelemente $G_a$'', $G_b$'' mit einem grösseren thermischen Ausdehnungskoeffizienten gegenüber demjenigen des Spindelstocks 2'' gleichfalls eine Temperaturerhöhung erfahren, ergibt sich eine thermische Längenänderung der Dehnelemente $G_a$'',

$G_b$''. Durch die Anordnung der Dehnelemente $G_a$'', $G_b$'' unter einem Winkel $\varphi$ zur X''-Richtung erfolgt eine Auslenkung des Endes $M_2$'' des Massstabs M'' in X''-Richtung um einen grösseren Betrag als die thermische Längenänderung der Dehnelemente $G_a$'', $G_b$'' beträgt; durch ihre geneigte Anordnung wirken die Dehnelemente $G_a$'', $G_b$'' gleichzeitig als Übersetzungselement. Das Übersetzungsverhältnis wird durch Einstellen des Winkels $\varphi$ so gewählt, dass eine gesamte thermisch bedingte Verschiebung des Massstabs M'' gegenüber der Abtastebene der Abtasteinheit um den gleichen Betrag $\triangle c''$ erzielt wird.

## Patentansprüche

1. Messeinrichtung zur Messung der Relativlage zweier Objekte (1, 2; 1', 2'; 1'', 2'') insbesondere zweier Maschinenteile von Bearbeitungsmaschinen, mit einem mit dem ersten Objekt (2; 2'; 2'') verbundenen, jedoch gegenüber diesem in Messrichtung (X; X'; X'') verschiebbaren Massstab (M; M'; M'') und einer am zweiten Objekt (1; 1'; 1'') befestigten Abtasteinheit (A; A') zur Abtastung des Massstabs, bei der zur Kompensation thermischer Längenänderungen des ersten Objekts (2; 2'; 2'') mindestens ein Dehnelement (G; G'; $G_a$'', $G_b$''), dessen thermischer Ausdehnungskoeffizient sich merklich vom thermischen Ausdehnungskoeffizienten des ersten Objekts (2; 2'; 2'') unterscheidet, mit einem Ende ($G_1$; $G_1$'; $G_{a1}$'', $G_{b1}$'') am ersten Objekt befestigt und mit dem anderen Ende ($G_2$; $G_2$'; $G_{a2}$'', $G_{b2}$'') mit dem Massstab verbunden ist, dadurch gekennzeichnet, dass das andere Ende ($G_2$; $G_2$'; $G_{a2}$'', $G_{b2}$'') des mindestens einen Dehnelements (G; G'; $G_a$'', $G_b$'') mit dem Massstab (M; M'; M'') über eine Übersetzungsbaueinheit (S; S'; $G_a$'', $G_b$'', $K_a$'', $K_b$'') mit einstellbarem Übersetzungsverhältnis verbunden ist.

2. Messeinrichtung nach Anspruch 1, dadurch gekennzeichnet, dass das Dehnelement (G; G') als Massstabträger für den Massstab (M; M') ausgebildet ist und dass der Massstabträger (G; G') mit einem Ende ($G_1$; $G_1$') direkt mit einem ersten Befestigungselement ($B_1$; $B_1$') am ersten Objekt (2; 2') befestigt und mit dem anderen Ende ($G_2$; $G_2$') über ein in einem zweiten Befestigungselement ($B_2$; $B_2$') gelagertes, die Übersetzung bewirkendes Schwenkelement (S; S') mit dem einen Ende ($M_2$; $M_2$') des am Massstabträger (G; G') in Messrichtung (X; X') verschiebbaren Massstabs (M; M') verbunden ist.

3. Messeinrichtung nach Anspruch 2, dadurch gekennzeichnet, dass zur Einstellung des Hebelverhältnisses des Schwenkelements (S) im Befestigungselement ($B_2$) ein mittels einer Spindel (SP) senkrecht zur Messrichtung (X) verschiebbares Einstellelement (ST) mit einem Vorsprung (D) vorgesehen ist, der als Drehpunkt für das Schwenkelement (S) eine ebene Rückseite (R) des Schwenkelements (S) beaufschlagt.

4. Messeinrichtung nach Anspruch 2, dadurch gekennzeichnet, dass der Massstab (M) am anderen Ende ($M_1$) zusätzlich von einer Stauchvorrichtung (F) beaufschlagt wird.

5. Messeinrichtung nach Anspruch 2, dadurch gekennzeichnet, dass der Massstab (M') am anderen

Ende (M₁') zusätzlich von einer Dehnvorrichtung (F') beaufschlagt wird.

6. Messeinrichtung nach den Ansprüchen 4 und 5, dadurch gekennzeichnet, dass die Stauchvorrichtung (F) bzw. die Dehnvorrichtung (F') jeweils aus einer einstellbaren Feder bestehen.

7. Messeinrichtung nach Anspruch 1, dadurch gekennzeichnet, dass zwei Dehnelemente (G$_a$'', G$_b$'') an den einen Enden (G$_{a1}$'', G$_{b1}$'') mittels jeweils eines Befestigungspunkts (P$_a$'', P$_b$'') direkt am ersten Objekt (2'') befestigt und mit den anderen Enden (G$_{a2}$'', G$_{b2}$'') über je ein Gelenk (K$_a$'', K$_b$'') mit dem Ende (M₂'') des Massstabs (M'') verbunden sind und dass die Dehnelemente (G$_a$'', G$_b$'') unter einem Winkel φ zur Messrichtung (X'') angeordnet sind, so dass die Dehnelemente (G$_a$'', G$_b$'') gleichzeitig ein Übersetzungselement bilden.

8. Messeinrichtung nach Anspruch 7, dadurch gekennzeichnet, dass die Dehnelemente (G$_a$'', G$_b$'') aus einem Stück bestehen und dass die Gelenke (K$_a$'', K$_b$'') durch Querschnittsverengungen gebildet sind.

**Claims**

1. Measuring device for measuring the relative position of two objects (1, 2; 1', 2'; 1'', 2''), in particular of two machine parts or processing machines, having a scale (M; M'; M'') which is connected to the first object (2; 2'; 2'') but which is displaceable relative to the latter in the measurement direction (X; X'; X''), and a scanning unit (A; A'), secured at the second object (1; 1'; 1''), for scanning the scale, wherein, in order to compensate for thermal changes in length of the first object (2; 2'; 2''), at least one expansion element (G; G'; G$_a$'', G$_b$''), the coefficient of thermal expansion of which differs markedly from the coefficient of thermal expansion of the first object (2; 2'; 2''), is secured by one end (G₁; G₁'; G$_{a1}$'', G$_{b1}$'') at the first object and is connected by the other end (G₂; G₂'; G$_{a2}$'', G$_{b2}$'') to the scale, characterized in that the other end (G₂; G₂'; G$_{a2}$'', G$_{b2}$'') of the at least one expansion element (G; G'; G$_a$'', G$_b$'') is connected to the scale (M; M'; M'') via a transmission component (S; S'; G$_a$'', G$_b$'', K$_a$'', K$_b$'') with an adjustable transmission ratio.

2. Measuring device according to Claim 1, characterized in that the expansion element (G; G') is constructed as a scale carrier for the scale (M; M'), and in that the scale carrier (G; G') is secured by one end (G₁; G₁') directly to a first securing element (B₁; B₁') at the first object (2; 2'), and is connected by the other end (G₂; G₂'), via a swivel element (S; S') which is mounted in a second securing element (B₂; B₂') and which effects the transmission, to one end (M₂; M₂') of the scale (M; M') which is displaceable at the scale carrier (G; G') in the measurement direction (X; X').

3. Measuring device according to Claim 2, characterized in that, in order to adjust the lever ratio of the swivel element (S) there is provided in the securing element (B₂) an adjusting element (ST), which is displaceable by means of a spindle (SP) perpendicular to the measurement direction (X), with a projection (D), which, as point of rotation for the swivel element (S), acts on a flat rear surface (R) of the swivel element (S).

4. Measuring device according to Claim 2, characterized in that the scale (M) is additionally acted upon at the other end (M₁) by a compression device (F).

5. Measuring device according to Claim 2, characterized in that the scale (M') is additionally acted upon at the other end (M₁') by an elongation device (F').

6. Measuring device according to Claims 4 and 5, characterized in that the compression device (F) or the elongation device (F') consists in each case of an adjustable spring.

7. Measuring device according to Claim 1, characterized in that two expansion elements (G$_a$'', G$_b$'') are each secured at one end (G$_{a1}$'', G$_{b1}$'') by means of a respective securing point (P$_a$'', P$_b$'') directly at the first object (2'') and are each connected by the other end (G$_{a2}$'', G$_{b2}$'') via a respective joint (K$_a$'', K$_b$'') to the end (M₂'') of the scale (M'') and in that the expansion elements (G$_a$'', G$_b$'') are disposed at an angle φ to the measurement direction (X''), so that the expansion elements (G$_a$'', G$_b$''.) at the same time form a transmission element.

8. Measuring device according to Claim 7, characterized in that the expansion elements (G$_a$'', G$_b$'') consist of a single unit, and in that the joints (K$_a$'', K$_b$'') are formed by narrowings of the cross-section.

**Revendications**

1. Dispositif de mesure pour mesurer la position relative de deux objets (1, 2; 1', 2'; 1'', 2''), en particulier de deux pièces de machines d'usinage, comprenant une échelle (M, M', M'') raccordée au premier objet (2, 2', 2''), mais déplaçable vis-à-vis de celui-ci dans le sens de la mesure (X, X', X''), et une unité de balayage (A, A') fixée au second objet (1, 1', 1'') pour la lecture de la graduation, et dans lequel, pour la compensation des variations de longueurs thermiques du premier objet (2, 2', 2''), au moins un élément extensible (G; G'; G$_a$'', G$_b$''), dont le coefficient de dilatation thermique diffère notablement du coefficient de dilatation thermique du premier objet (2, 2', 2''), est fixé par une extrémité (G₁; G₁'; G$_{a1}$'', G$_{b1}$'') au premier objet et raccordée par l'autre extrémité (G₂; G₂'; G$_{a2}$'', G$_{b2}$'') à l'échelle, caractérisé par le fait que l'autre extrémité (G₂; G₂'; G$_{a2}$'', G$_{b2}$'') d'au moins un élément extensible (G; G'; G$_a$'', G$_b$'') est raccordée à l'échelle (M; M'; M'') par une unité de construction démultiplicatrice (S; S'; G$_a$'', G$_b$'', K$_a$'', K$_b$'') à rapport de démultiplication réglable.

2. Dispositif de mesure selon la revendication 1, caractérisé par le fait que l'élément extensible (G; G') est réalisé sous la forme d'un support portant l'échelle (M; M') et que le support (G; G'), par une extrémité (G₁; G₁') est fixé directement par un premier élément de fixation (B₁; B₁') au premier objet (2; 2') et par l'autre extrémité (G₂; G₂') est raccordé, par l'intermédiaire d'un organe pivotant (S; S') monté dans un second élément de fixation (B₂; B₂') et provoquant la démultiplication, à une extrémité (M₂; M₂') de l'échelle (M; M') déplaçable sur le support (G; G') dans le sens de la mesure (X; X').

3. Dispositif de mesure selon la revendication 2, caractérisé par le fait que, pour le réglage du rapport de levier de l'organe pivotant (S), il est prévu, dans l'élément de fixation (B₂) un élément de réglage (ST) déplaçable au moyen d'une broche (SP) perpendiculairement au sens de la mesure (X) et muni d'une saillie (D) qui, en tant que point d'appui pour l'organe pivotant (S) coopère avec une face arrière plane (R) de l'organe pivotant (S).

4. Dispositif de mesure selon la revendication 2, caractérisé par le fait que l'échelle (M), à son autre extrémité (M₁), est en plus soumise à l'action d'un dispositif de refoulement (F).

5. Dispositif de mesure selon la revendication 2, caractérisé par le fait que l'échelle (M'), à son autre extrémité (M₁'), est en plus soumise à l'action d'un dispositif d'allongement (F').

6. Dispositif de mesure selon les revendications 4 et 5, caractérisé par le fait que le dispositif de refoulement (F) et le dispositif d'allongement (F') sont respectivement constitués par un ressort réglable.

7. Dispositif de mesure selon la revendication 1, caractérisé par le fait que deux éléments extensibles (Gₐ'', G_b'') à l'une de leurs extrémités (Gₐ₁'', G_b₁'') sont fixés directement au premier objet (2'') respectivement au moyen d'un point de fixaton (Pₐ'', P_b'') et, par leurs autres extrémités Gₐ₂'', G_b₂'') sont respectivement raccordés par une articulation (Kₐ'', K_b'') à l'extrémité (M₂'') de l'échelle (M'') et que les éléments extensibles (Gₐ'', G_b'') sont disposés sous un angle (α) par rapport au sens de la mesure (X''), si bien que les éléments extensibles (Gₐ'', G_b'') forment en même temps un élément démultiplicateur.

8. Dispositif de mesure selon la revendication 7, caractérisé par le fait que les éléments extensibles (Gₐ'', G_b'') sont réalisés en une seule pièce et que les articulations (Kₐ'', K_b'') sont formées par des rétrécissements de la section transversale.

**Fig.1**

Fig. 2

0 126 888

Fig. 3